# EUROPÄISCHE PATENTSCHRIFT

(11) **EP 2 824 284 B1**
(45) Veröffentlichungstag und Bekanntmachung des Hinweises auf die Patenterteilung: **23.03.2016**
(21) Anmeldenummer: 14176014.0
(22) Anmeldetag: 07.07.2014
(51) Int. Cl.: F01D 13/00, F01D 13/02, F02C 6/02

(54) **Turbofan-Triebwerk**
Turbofan engine
Turbine à double flux

(30) Priorität: 10.07.2013 DE 102013213518
(43) Veröffentlichungstag der Anmeldung: 14.01.2015
(73) Patentinhaber: Rolls-Royce Deutschland Ltd & Co KG, 15827 Blankenfelde-Mahlow (DE)
(72) Erfinder: Burghardt, Sascha, 15370 Vogelsdorf (DE)
(74) Vertreter: Maikowski & Ninnemann

(56) Entgegenhaltungen:
- EP-A2- 1 331 386
- US-A- 2 168 726
- US-A- 3 355 890
- US-A- 3 368 352
- US-A1- 2006 185 346
- US-A1- 2010 011 741

## Beschreibung

Die Erfindung betrifft ein Turbofan-Triebwerk gemäß dem Oberbegriff des Patentanspruchs 1.

Turbofan-Triebwerke werden auch als Nebenstromtriebwerke oder Zweistrom-Turbo-Luftstrahl-Triebwerke bezeichnet. Weitere Bezeichnungen sind Bläser- oder Bypass-Triebwerke. Sie zeichnen sich dadurch aus, dass der Fan (auch als Bläser bezeichnet) von einer hinter einem Kerntriebwerk angeordneten mehrstufigen Niederdruckturbine angetrieben wird, wobei ein großer Anteil der vom Triebwerk angesaugten Luftmasse am Kerntriebwerk vorbei beschleunigt wird. Das Triebwerk bildet dabei einen Primärstromkanal durch das Kerntriebwerk sowie einen Sekundärstromkanal für den äußeren Luftstrom, der am Kerntriebwerk vorbeigeführt wird, aus.

Ein Zweiwellen-Turbofan-Triebwerk ist klassischerweise derart aufgebaut, dass es zwei Wellen aufweist, nämlich eine erste Welle, die die Niederdruckturbine mit dem Fan koppelt und auch als Niederdruckwelle bezeichnet wird und eine zweite Welle, die die Hochdruckturbine mit dem Hochdruckverdichter koppelt und auch als Hochdruckwelle bezeichnet wird. Die Wellenkonstruktion ist derart, dass die Niederdruckwelle durch die Hochdruckwelle hindurchgeführt wird, d. h., diese koaxial verbaut sind.

Es ist allgemein anzustreben, Triebwerke mit einem Fan bereitzustellen, der einen großen Durchmesser aufweist, um das Bypass-Verhältnis zu erhöhen und hierdurch die Triebwerke effizienter und auch leiser zu gestalten. Es besteht daher ein Bedürfnis, Triebwerke mit Fans (Bläserstufen) mit zunehmend größeren Abmessungen zu entwickeln.

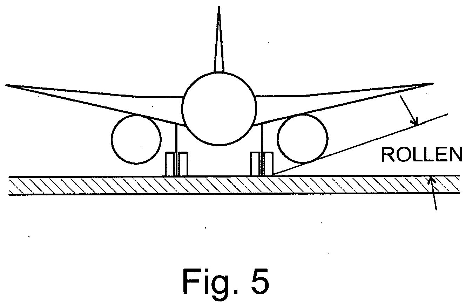

Eine Vergrößerung des Fandurchmessers führt jedoch zu Problemen. Zum einen ist zu berücksichtigen, dass Flugtriebwerke häufig unter den Tragflächen eines Flugzeugs installiert sind. Dabei ist sicherzustellen, dass ein Mindestabstand zum Boden hergestellt ist, wie anhand der Figur 5 illustriert ist. Die erlaubte Größe des Fans hängt daher u. a. von der vertikalen Position der Tragfläche am Flugzeug, vom vertikalen Abstand des Triebwerks zur Tragfläche und von dem zu berücksichtigenden Abstand zum Boden ("ground clearance") ab.

Zum anderen verhält es sich so, dass der Fan mit zunehmendem Durchmesser langsamer dreht. Dementsprechend dreht die Niederdruckwelle mit zunehmendem Fandurchmesser langsamer. Damit steigt die Belastung (das Drehmoment), dass die Niederdruckwelle zu übertragen hat, weswegen die Niederdruckwelle dicker ausgeführt werden muss. Dies wiederum führt zu einem erhöhten Bauraum an der Niederdruckwelle. Da die Niederdruckwelle koaxial mit der Hochdruckwelle verbaut ist, führt dies gleichzeitig zu einem erhöhten Bauraum im Kerntriebwerk. Dies steht jedoch in Gegensatz zu dem in der Triebwerkstechnik allgemein herrschenden Bestreben, durch ständige Steigerung der Verdichtungsverhältnisse die Größe des Kerntriebwerks immer weiter zu reduzieren.

Aus der US 2006/0185346 A1 ist ein Turbofan-Triebwerk bekannt, das zwei Niederdruckturbinen und zwei Fans aufweist, die jeweils durch eine Niederdruckwelle miteinander gekoppelt sind. Dabei durchströmt die aus dem Kerntriebwerk austretende Luftmasse zunächst die eine Niederdruckturbine und anschließend die andere Niederdruckturbine. Die beiden Niederdruckwellen sind dabei winklig angeordnet. Eine solche winklige Anordnung ist als nachteilig anzusehen, da aufgrund der winkligen Anordnung keine geraden Schubvektoren realisierbar sind. Auch ist die genannte Bauraumproblematik im Kerntriebwerk nicht behoben, da eine der beiden Niederdruckwellen koaxial zu der Hochdruckwelle des Kerntriebwerks verläuft.

Aus der US 2010/0011741 A1 ist ein Turbonfan-Triebwerk bekannt, das eine Niederdruckwelle aufweist, die an ihrem axial vorderen Ende über ein Getriebe mit zwei parallel angeordneten Wellen gekoppelt ist, die jeweils einen eigenen Fan antreiben. Auch bei diesem Triebwerk ist die genannte Bauraumproblematik im Bereich des Kerntriebwerks nicht behoben, da die Niederdruckwelle durch das Kerntriebwerk hindurchgeführt wird.

US 2168726 A und US 3 368 352 A zeigen ebenfalls Turbofan-Triebwerke gemäß dem Stand der Technik.

Der vorliegenden Erfindung liegt die Aufgabe zugrunde, ein Turbofan-Triebwerk bereitzustellen, das auch bei Bereitstellung eines großen Bypass-Verhältnisses die Realisierung eines kleinen Kerntriebwerks ermöglicht.

Diese Aufgabe wird erfindungsgemäß durch ein Turbofan-Triebwerk mit den Merkmalen des Anspruchs 1 gelöst. Ausgestaltungen der Erfindung sind in den Unteransprüchen angegeben.

Danach sieht die erfindungsgemäße Lösung vor, dass die Hochdruckwelle und die Niederdruckwelle(n) in einem Turbofan-Triebwerk derart angeordnet sind, dass keine Niederdruckwelle des Turbofan-Triebwerks durch das Kerntriebwerk verläuft. Weder für den Fall, dass das Turbofan-Triebwerk genau eine Niederdruckwelle aufweist, noch für den Fall, dass das Turbofan-Triebwerk eine Mehrzahl von Niederdruckwellen aufweist, verläuft somit eine Niederdruckwelle durch das Kerntriebwerk.

Dadurch, dass die Niederdruckwelle nicht durch das Kerntriebwerk hindurchgeführt wird, wird im Kerntriebwerk kein Bauraum für die Anordnung der Niederdruckwelle benötigt, weswegen das Kerntriebwerk in seiner Größe reduziert werden kann. Gleichzeitig kann, sofern das Triebwerk einen langsam drehenden Fan mit großem Durchmesser zur Bereitstellung eines großen Bypass-Verhältnisses aufweist, die Niederdruckwelle dicker ausgebildet werden, ohne dass hierdurch der Bauraum im Kerntriebwerk erhöht wird. Sofern das Triebwerk mehrere Fans und Niederdruckwellen aufweist, wird durch die Mehrzahl von Fans ein großes Bypass-Verhältniss bereitgestellt.

Mit der erfindungsgemäßen Lösung geht einher, dass keine Niederdruckwelle des Turbofan-Triebwerks koaxial zu der Hochdruckwelle des Turbofan-Triebwerks verläuft. Vielmehr sind die Hochdruckwelle und die Niederdruckwelle in radialer Richtung des Triebwerks zueinander beabstandet angeordnet.

Gemäß der Erfindung ist vorgesehen, dass die Niederdruckwelle oder für den Fall, dass mehrere Niederdruckwellen vorhanden sind, jede dieser Niederdruckwellen im Wesentlichen parallel zur Hochdruckwelle verläuft. Dabei werden kleine Abweichungen von der Parallelität im Bereich zwischen 1° und 5° immernoch als im Wesentlichen parallel angesehen. Die parallele Anordnung erlaubt es, anders als im Stand der Technik der US 2006/0185346 A1 Schubvektoren bereitzustellen, die gerade ausgebildet sind.

Gemäß einer Ausgestaltung, die nicht Teil des beanspruchten Gegenstandes ist, kann alternativ die Niederdruckwelle oder für den Fall, dass mehrere Niederdruckwellen vorhanden sind, jede dieser Niederdruckwellen winklig zur Hochdruckwelle verlaufen. Auch können im Falle mehrerer Niederdruckwellen diese zueinander winklig verlaufen.

Um zu erreichen, dass die Niederdruckwelle nicht durch das Kerntriebwerk verläuft, ist gemäß einem Ausführungsbeispiel vorgesehen, dass der Primärstromkanal oder Teilkanäle des Primärstromkanals vor und hinter dem Kerntriebwerk in radialer Richtung derart umgelenkt sind, dass der Bereich des Primärstromkanals, der durch das Kerntriebwerk verläuft, radial beabstandet zum Sekundärstromkanal ist oder, im Falle mehrerer Sekundärstromkanäle, radial beabstandet zu jedem der Sekundärstromkanäle ist. Der Primärstromkanal umfasst somit angrenzend an den Fan Bereiche, Kanäle oder Abschnitte, die gebogen sind und die durch den Fan angesaugte Luftmasse mit einer radialen Komponente umlenken und dann in axialer Richtung dem Kerntriebwerk zuführen. Ebenso sind Bereiche, Kanäle oder Abschnitte des Primärstromkanals vorhanden, die hinter dem Kerntriebwerk gebogen verlaufen und die vom Kerntriebwerk beschleunigte Luft der Niederdruckturbine oder den Niederdruckturbinen zuführen.

Dementsprechend ist gemäß einer Ausgestaltung der Erfindung vorgesehen, dass bezogen auf die Strömungsrichtung hinter jedem Fan ein axial vorderes Ende des Primärstromkanals ausgebildet ist und vor jeder Niederdruckturbine ein axial hinteres Ende des Primärstromkanals ausgebildet ist. Dabei kann vorgesehen sein, dass hinter jedem Fan und vor jeder Niederdruckturbine der Primärstromkanal oder Abschnitte desselben derart gebogen verlaufen, dass die Luftmasse im Bereich des Kerntriebwerks im Wesentlichen mit allein axialer Ausrichtung geführt wird. Hierzu kann vorgesehen sein, dass die Krümmung des Primärstromkanals vor und hinter dem Kerntriebwerk einen Wendepunkt durchläuft.

In einer Ausgestaltung der Erfindung umfasst das Triebwerk mindestens zwei Fans und mindestens zwei Niederdruckturbinen, wobei jeweils ein Fan und eine Niederdruckturbine über eine Niederdruckwelle miteinander gekoppelt sind. Dabei umfasst das Kerntriebwerk jedoch nur eine einzige Hochdruckwelle. Entsprechend der Anzahl der Fans und Niederdruckturbinen weist das Triebwerk zwei oder mehr Sekundärstromkanäle auf.

Durch die Verwendung von mehr als einem Fan wird es ermöglicht, ein hohes Bypass-Verhältnis bereitzustellen, ohne dabei Fans mit großem Durchmesser realisieren zu müssen. Beispielsweise ermöglicht es diese Ausgestaltung der Erfindung, ein Bypass-Verhältnis von 15:1 bis 20:1 bereitzustellen. Durch die Verwendung kleinerer Fans ist es auch möglich, die Niederdruckwellen schneller drehend und dünner auszuführen.

Gemäß einer Ausführungsvariante bildet der Primärstromkanal an seinem axial vorderen Ende mindestens zwei Kanäle aus, die sich vor dem Kerntriebwerk vereinen, wobei jeder Kanal einem der Fans zugeordnet ist, so dass in jeden Kanal ein Teil des den jeweiligen Fan passierenden Luftstroms geleitet wird. Ebenso ist vorgesehen, dass der Primärstromkanal sich hinter dem Kerntriebwerk in mindestens zwei Kanäle aufteilt, die jeweils zu einer der Niederdruckturbinen führen. Hierdurch wird zum einen sichergestellt, dass jeder der Fans Luftmasse für das Kerntriebwerk bereitstellt und zum anderen sichergestellt, dass der das Kerntriebwerk verlassende Gasstrom jeder der Niederdruckturbinen zugeführt wird, um diese für den Antrieb der Fans in Rotation zu versetzen.

Das Triebwerk umfasst in einer vorteilhaften Ausgestaltung mindestens ein Außengehäuse, das mehrere Sekundärstromkanäle entsprechend der Anzahl der Fans definiert. Dabei wird ein Teil des jeden Fan passierenden Gasstroms jeweils in einen der Sekundärstromkanäle geleitet. Es kann vorgesehen sein, dass die Sekundärstromkanäle in axialer Richtung vor dem Primärstromkanal enden, d. h. der Düsenrand der äußeren "kalten" Düse liegt in axialer Richtung vor dem Düsenrand der inneren "heißen" Düse.

Gemäß einer weiteren Ausgestaltung der Erfindung umfasst das Triebwerk zwei Fans, zwei Niederdruckturbinen und zwei Niederdruckwellen. Dabei ist das Kerntriebwerk versetzt zu der Ebene angeordnet, die durch die beiden Niederdruckwellen definiert ist. Mit anderen Worten befindet sich das Kerntriebwerk oberhalb oder unterhalb der durch die beiden Niederdruckwellen definierten Ebene; es ist angehoben oder abgesenkt. Dies ist mit dem Vorteil verbunden, dass die Fans in geringerem Abstand zueinander angeordnet werden können.

Sofern das Triebwerk mehr als zwei Fans, Niederdruckturbinen und Niederdruckwellen aufweist, so sind diese beispielsweise symmetrisch angeordnet, wobei das Kerntriebwerk mittig bezogen auf die durch die Niederdruckwellen definierten Achsen angeordnet ist.

Es wird darauf hingewiesen, dass die erfindungsgemäße Lösung nicht auf Kerntriebwerke mit einem Hochdruckverdichter und einer Hochdruckturbine beschränkt ist. In weiteren Ausgestaltungen der Erfindung kann vorgesehen sein, dass das Kerntriebwerk des Weiteren einen Mitteldruckverdichter und eine Mitteldruckturbine aufweist, die über eine Mitteldruckwelle miteinander gekoppelt sind. Eine solche Mitteldruckwelle verläuft dabei koaxial zur Hochdruckwelle.

Weiter wird darauf hingewiesen, dass gemäß der erfindungsgemäßen Lösung der Einsatz eines Untersetzungsgetriebes zwischen der Niederdruckwelle und dem zugehörigen Fan nicht erforderlich ist. Die gewünschte Drehzahl des Fan oder der Fans wird direkt durch die Niederdruckturbine(n) eingestellt. Jedoch schließt die erfindungsgemäße Lösung auch nicht aus, in Ausführungsvarianten zusätzlich ein Untersetzungsgetriebe im Kraftweg zwischen der Niederdruckwelle und dem jeweiligen Fan einzusetzen.

Die Erfindung wird nachfolgend unter Bezug auf die Figuren der Zeichnung anhand mehrerer Ausführungsbeispiele näher erläutert. Es zeigen:
- Figur 1: schematisch eine Längsansicht eines ersten Ausführungsbeispiels eines Turbofan-Triebwerks, wobei das Turbofan-Triebwerk eine Hochdruckwelle und eine Niederdruckwelle aufweist und wobei die Niederdruckwelle nicht durch das Kerntriebwerk verläuft;
- Figur 2: schematisch eine Ansicht von oben eines zweiten Ausführungsbeispiels eines Turbofan-Triebwerks, wobei das Turbofan-Triebwerk eine Hochdruckwelle und zwei Niederdruckwellen aufweist, die jeweils parallel zueinander verlaufen;
- Figur 3: in perspektivischer Ansicht das Turbofan-Triebwerk der Figur 2, jedoch mit einer Anordnung der Hochdruckwelle in einer anderen Ebene bezogen auf die Niederdruckwellen;
- Figur 4: das Turbofan-Triebwerk der Figur 3 unter zusätzlicher Darstellung einer Gondel; und
- Figur 5: schematisch die Anordnung von Flugtriebwerken unter den Tragflächen eines Flugzeugs.

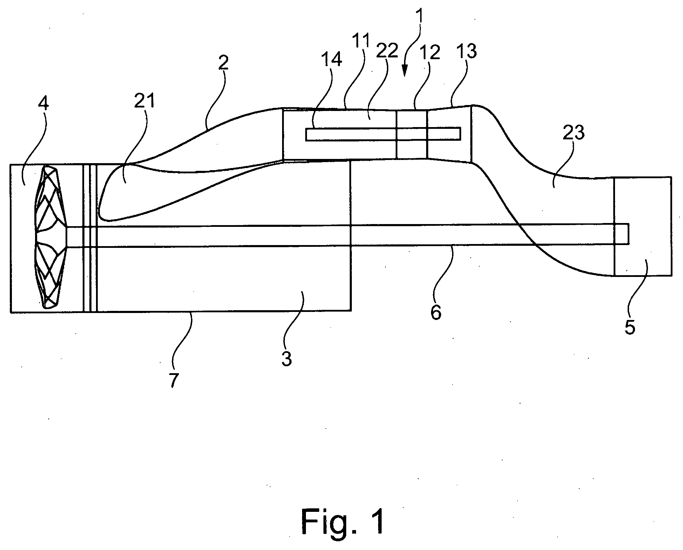

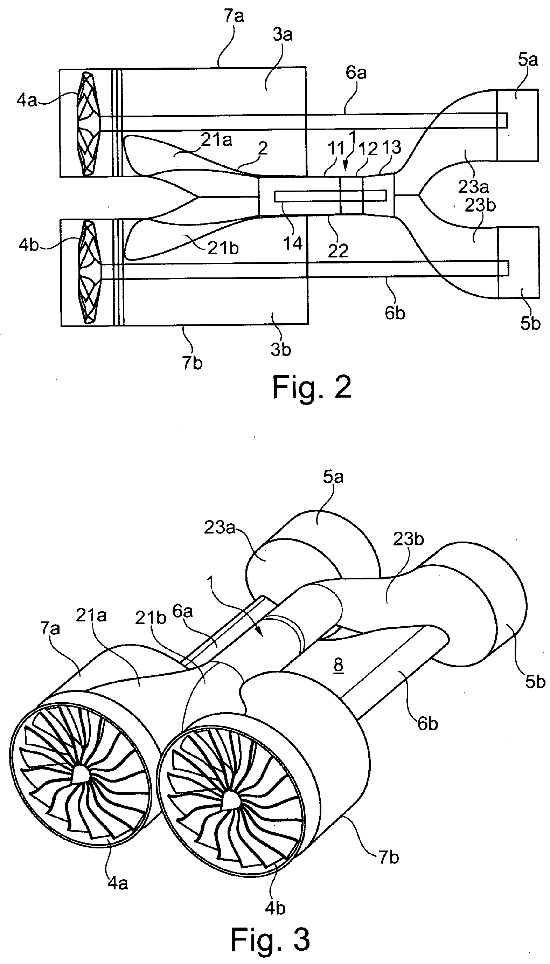

Die Figur 1 zeigt in seitlicher Ansicht ein erstes Ausführungsbeispiel eines Turbofan-Triebwerks, bei dem eine Niederdruckwelle des Turbofan-Triebwerks nicht durch das Kerntriebwerk des Turbofan-Triebwerks geführt ist. Die Darstellung der Figur 1 ist dabei schematisch und beschränkt sich auf die Darstellung derjenigen Komponenten eines Triebwerks, die für die Erfindung relevant sind. Weitere Komponenten eines Triebwerks wie z. B. Gehäuse, Lagerungen, Nebenaggregate und Antriebe, die ein Triebwerk typischerweise aufweist und die dem Fachmann an sich bekannt sind, sind in der Figur 1 nicht gesondert dargestellt. Gleiches gilt für die Figuren 2 bis 4.

Gemäß der Figur 1 umfasst das Turbofan-Triebwerk ein Kerntriebwerk 1, das - jeweils wiederum schematisch dargestellt - einen Hochdruckverdichter 11, eine Brennkammer 12 und eine Hochdruckturbine 13 aufweist. Die Hochdruckturbine 13 und der Hochdruckverdichter 11 sind über eine erste Welle, die im Folgenden als Hochdruckwelle bezeichnet wird, miteinander gekoppelt.

Das Triebwerk der Figur 1 umfasst des Weiteren einen Fan 4, der im Bereich eines Einlasses des Triebwerks angeordnet ist. Der Fan 4 wird auch als Bläserstufe bezeichnet. Der Fan 4 wird durch eine zweite Welle 6, im Folgenden als Niederdruckwelle bezeichnet, angetrieben. Die Niederdruckwelle 6 ist mit einer Niederdruckturbine 5 verbunden. Die Niederdruckturbine 5 und der Fan 4 sind somit über die Niederdruckwelle 6 miteinander gekoppelt. Dabei ist vorgesehen, dass die Kopplung zwischen der Niederdruckturbine 5 und dem Fan 4 ohne ein Untersetzungsgetriebe im Niederdruckwellensystem realisiert ist. Alternativ kann zusätzlich ein Untersetzungsgetriebe im Kraftweg zwischen der Niederdruckwelle 6 und dem Fan 4 vorgesehen sein.

Der Fan 4 ist in einem Außengehäuse 7 angeordnet, das einen Sekundärstromkanal 3 definiert. Die durch den Fan 4 angesaugte Luftmasse, die in den Sekundärstromkanal 3 strömt, wird am Kerntriebwerk 1 vorbei beschleunigt.

Das Triebwerk weist des Weiteren einen Primärstromkanal 2 auf, der einen Teil der vom Fan 4 angesaugten Luftmasse dem Kerntriebwerk 1 zuführt. Der Primärstromkanal 2 weist dabei im Wesentlichen drei axial hintereinander angeordnete Abschnitte 21, 22, 23 auf.

Der erste Abschnitt 21 ist hinter dem Fan 4 angeordnet und dient dazu, einen Anteil der vom Fan 4 angesaugten Luftmasse aufzunehmen. Der erste Abschnitt 21 ist dabei derart geformt, dass sein Verlauf in axialer Richtung auch eine radiale Komponente aufweist, so dass die in den Abschnitt 21 eingeströmte Luft radial nach außen weggeführt wird. In dem zweiten Teilabschnitt 22 verläuft der Primärstromkanal 2 in axialer Richtung. Die Krümmung des ersten Teilabschnitts 21 weist dabei einen Wendepunkt auf.

Der dritte Teilabschnitt 23, der sich an den zweiten Teilabschnitt 22 anschließt, ist wiederum gekrümmt ausgebildet und umfasst eine Komponente in radialer Richtung in Richtung der Niederdruckwelle 6, so dass das axial hintere Ende des dritten Teilabschnitts 23 vor der Niederdruckturbine 5 endet und diese mit dem vom Kerntriebwerk 1 bereitgestellten Gasstrom versorgt. Hierdurch wird die Niederdruckturbine 5 angetrieben, die ihr Drehmoment über die Niederdruckwelle 6 auf den Fan 4 überträgt.

Das Turbofan-Triebwerk der Figur 1 zeichnet sich dadurch aus, dass die Niederdruckwelle 6 nicht durch das Kerntriebwerk 1 geführt ist. Vielmehr sind die Niederdruckwelle 6 und die Hochdruckwelle 14 in radialer Richtung beabstandet. Dementsprechend verläuft die Niederdruckwelle 6 nicht koaxial zur Hochdruckwelle 14 des Kerntriebwerks 1. Die Niederdruckwelle 6 und die Hochdruckwelle 14 verlaufen parallel zueinander, so dass das Triebwerk gerade Schubvektoren bereitstellt.

Indem die Niederdruckwelle 6 nicht durch das Kerntriebwerk 1 hindurch verläuft, und nicht koaxial zur Hochdruckwelle 14 ausgebildet ist, kann das Kerntriebwerk 1 mit kleiner Größe ausgebildet sein. Gleichzeitig ist es möglich, einen langsam drehenden Fan 4 mit großem Durchmesser zu realisieren, wobei durch die für diesen Fall erforderliche Dicke der Niederdruckwelle 6 kein Bauraum des Kerntriebwerks 1 verbraucht wird.

Die Figur 2 zeigt ein weiteres Ausführungsbeispiel eines Turbofan-Triebwerks, bei dem die Niederdruckwelle des Triebwerks nicht durch das Kerntriebwerk hindurch verläuft. Das Ausführungsbeispiel der Figur 2 umfasst zwei Fans 4a, 4b und dementsprechend auch zwei Niederdruckturbinen 5a, 5b, die jeweils über eine Niederdruckwelle 6a, 6b mit einem der Fans 4a, 4b gekoppelt sind. Das Triebwerk umfasst jedoch nur ein Kerntriebwerk 1 mit einem Hochdruckverdichter 11, einer Brennkammer 12, einer Hochdruckturbine 13 und einer Hochdruckwelle 14.

Die beiden Fans 4a, 4b befinden sich jeweils in Außengehäusen 7a, 7b, die zwei Sekundärstromkanäle 3a, 3b definieren.

Der Primärstromkanal 2 ist in diesem Ausführungsbeispiel derart ausgebildet, dass er an seinem axial vorderen Ende zwei Kanäle oder vordere Teilabschnitte 21 a, 21b ausbildet, die sich vor und in dem Kerntriebwerk 1 zu einem Abschnitt 22 vereinen. Jeder der Kanäle 21 a, 21b ist dabei einem der Fans 4a, 4b zugeordnet, so dass in jeden Kanal 21 a, 21 b ein Teil des den jeweiligen Fan 4a, 4b passierenden Luftstroms geleitet wird. Der Anteil der von dem jeweiligen Fan 4a, 4b angesaugten Luftmasse, der nicht in den jeweiligen Kanal 21a, 21b geleitet wird, strömt am Kerntriebwerk 1 als Nebenstrom vorbei.

Hinter dem Kerntriebwerk 1 teilt sich der Primärstromkanal 2 in zwei hintere Teilabschnitte oder hintere Kanäle 23a, 23b auf, die jeweils zu einer der Niederdruckturbinen 5a, 5b führen, die durch diesen Kanal 23a, 23b mit vom Kerntriebwerk 1 bereitgestellten Gas angetrieben werden.

Es wird darauf hingewiesen, dass die beiden Niederdruckwellen 6a, 6b im dargestellten Ausführungsbeispiel zueinander parallel und gleichzeitig parallel zu der Hochdruckwelle 14 angeordnet sind. Alternativ können die Niederdruckwellen 6a, 6b winklig angeordnet sein, wobei bevorzugt eine geringe Winkligkeit von z.B. 1° bis 5° realisiert ist, um eine Parallelität der Schubvektoren nicht zu verlieren.

Der Verlauf der beiden vorderen Teilabschnitte 21 a, 21b und der beiden hinteren Teilabschnitte 23a, 23b des Primärstromkanals weist in axialer Richtung wiederum jeweils eine radiale Komponente auf (mit einem zunehmenden radialen Abstand zur jeweiligen Niederdruckwelle 6a, 6b bei den vorderen Abschnitten 21a, 21b und einem abnehmenden radialen Abstand zu den jeweiligen Niederdruckwellen 6a, 6b bei den hinteren Abschnitten 23a, 23b). Insofern wird ergänzend auf die Beschreibung der Teilabschnitte 21 und 23 des Primärstromkanals 2 des Ausführungsbeispiels der Figur 1 hingewiesen.

Die Figur 3 zeigt das Turbofan-Triebwerk der Figur 2 in perspektivischer Darstellung. Dabei sind die beiden Fans 4a, 4b, deren Außengehäuse 7a, 7b, das Kerntriebwerk 1, die Kanäle 21 a, 21b und 23a, 23b des Primärstromkanals, die Niederdruckwellen 6a, 6b sowie die Niederdruckturbinen 5a, 5b erkennbar. Weiter ist ein in der Ebene der beiden Niederdruckwellen 6a, 6b ausgebildetes, schematisch dargestelltes Gehäuse 8 dargestellt, das in an sich bekannter Weise Lagerungen, Nebenaggregate, Antriebe, etc. aufweisen kann.

Es wird darauf hingewiesen, dass im dargestellten Ausführungsbeispiel das Kerntriebwerk 1 versetzt angeordnet ist zu der Ebene, die durch die beiden Niederdruckwellen 6a, 6b definiert ist. So ist das Kerntriebwerk 1 gegenüber dieser Ebene angehoben. Dies ist mit dem Vorteil verbunden, dass die beiden Fans 4a, 4b näher nebeneinander angeordnet sein können als im alternativen Fall, dass das Kerntriebwerk 1 sich in der Ebene der beiden Niederdruckwellen 6a, 6b befindet. Es wird jedoch darauf hingewiesen, dass in alternativen Ausgestaltungen durchaus vorgesehen sein kann, dass das Kerntriebwerk 1 in der Ebene angeordnet ist, die durch die beiden Niederdruckwellen 6a, 6b aufgespannt wird.

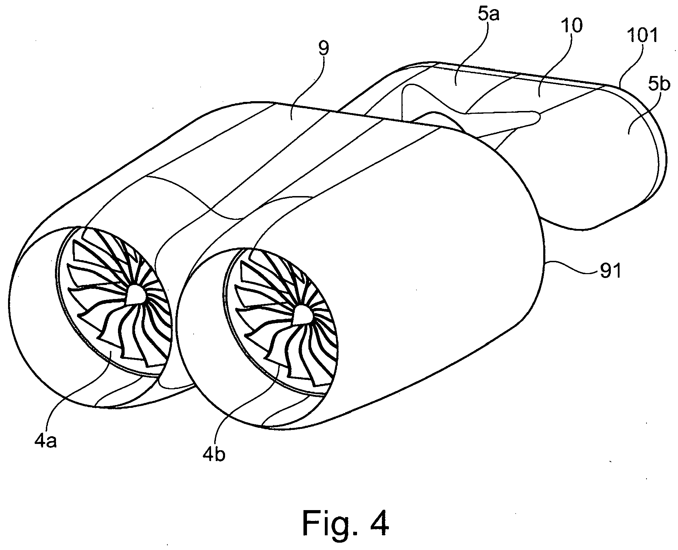

Die Figur 4 zeigt das Triebwerk der Figur 3 unter zusätzlicher Darstellung einer Gondel 9, die der aerodynamischen Verkleidung des Triebwerkes dient. Die Gondel definiert eine Nebenstromdüse, die einen axial hinteren Düsenrand 91 aufweist, an der die Nebenstromkanäle enden. Dieser hintere Düsenrand wird auch als "kalte Düse" bezeichnet. Des Weiteren ist vorgesehen, dass die beiden Niederdruckturbinen 5a, 5b von einem Gehäuse 10 umgeben sind, das die Kernstromdüse des Triebwerks begrenzt und einen hinteren Düsenrand 101 aufweist, an dem der Primärstromkanal endet.

Das beschriebene Turbofan-Triebwerk ermöglicht eine Vergrößerung des Fanvolumens zur Erhöhung der aerodynamischen Effizienz. Dabei kann gleichzeitig bei Verwendung mehrerer Fans das Nabenverhältnis der Fans verringert werden. Auch ermöglicht die Erfindung ein hohes Nebenstrom-Verhältnis zur Erhöhung der aerodynamischen Effizienz. Die Trennung der Anordnung von Niederdruckwelle und Hochdruckwelle erlaubt eine Verkleinerung des Kerntriebwerks, was ebenfalls die thermodynamische Effizienz erhöht. Auch wird hierdurch der Wartungszugang zu den Triebwerkskomponenten verbessert. Die Trennung von Niederdruckwelle und Hochdruckwelle führt des Weiteren dazu, dass der für die Niederdruckwelle verwendete Bauraum nicht durch die Größe des Kerntriebwerks limitiert ist.

Die erfindungsgemäße Lösung ermöglicht des Weiteren eine Erhöhung der Anzahl der Niederdruckturbinenstufen, was ebenfalls die thermodynamische Effizienz verbessert. Durch parallele Anordnung der Niederdruckwelle(n) und der Hochdruckwelle wird eine gerade Ausrichtung der Schubvektoren des Triebwerks ermöglicht.

Die Erfindung beschränkt sich in ihrer Ausgestaltung nicht auf die dargestellten Ausführungsbeispiele, die lediglich beispielhaft zu verstehen sind. Beispielsweise kann in alternativen Ausgestaltungen vorgesehen sein, dass das Turbofan-Triebwerk statt zwei Fans eine größere Anzahl von Fans und dementsprechend von Niederdruckturbinen und Niederdruckwellen aufweist, bei nur einem Kerntriebwerk. Auch sind das Design der dargestellten Komponenten und die Verläufe von Primärstromkanal und Sekundärstromkanälen lediglich beispielhaft zu verstehen.

## Patentansprüche

1. Turbofan-Triebwerk, das aufweist:
- genau ein Kerntriebwerk (1), das einen Hochdruckverdichter (11), eine Brennkammer (12) und eine Hochdruckturbine (13) aufweist, die über eine Hochdruckwelle (14) miteinander gekoppelt sind,
- mindestens einen Fan (4; 4a, 4b), von dem Gas sowohl in einen Primärstromkanal (2) als auch in einen Sekundärstromkanal (3; 3a, 3b) des Turbofan-Triebwerks geleitet wird,
- mindestens eine hinter dem Kerntriebwerk (1) angeordnete Niederdruckturbine (5; 5a, 5b), und
- mindestens eine Niederdruckwelle (6; 6a, 6b), wobei jede Niederdruckwelle (6; 6a, 6b) einen Fan (4; 4a, 4b) mit einer Niederdruckturbine (5; 5a, 5b) koppelt,
- wobei keine Niederdruckwelle (6; 6a, 6b) des Turbofan-Triebwerks durch das Kerntriebwerk (1) verläuft,
**dadurch gekennzeichnet,**
**dass** jede Niederdruckwelle (6; 6a, 6b) im Wesentlichen parallel zur Hochdruckwelle (14) verläuft.

2. Triebwerk nach Anspruch 1, **dadurch gekennzeichnet, dass** keine Niederdruckwelle (6; 6a, 6b) des Turbofan-Triebwerks koaxial zu der Hochdruckwelle (14) des Turbofan-Triebwerks verläuft.

3. Triebwerk nach einem der vorangehenden Ansprüche, **dadurch gekennzeichnet, dass** der Primärstromkanal (2) oder Teilkanäle (21 a, 21 b, 23a, 23b) des Primärstromkanals (2) vor und hinter dem Kerntriebwerk (1) in radialer Richtung derart umgelenkt sind, dass der Abschnitt (22) des Primärstromkanals (2), der durch das Kerntriebwerk (1) verläuft, in radialer Richtung beabstandet zu jedem Sekundärstromkanal (3; 3a, 3b) verläuft.

4. Triebwerk nach Anspruch 3, **dadurch gekennzeichnet, dass** bezogen auf die Strömungsrichtung hinter jedem Fan (4; 4a, 4b) ein axial vorderes Ende des Primärstromkanals (2) ausgebildet ist.

5. Triebwerk nach Anspruch 3 oder 4, **dadurch gekennzeichnet, dass** bezogen auf die Strömungsrichtung vor jeder Niederdruckturbine (5; 5a, 5b) ein axial hinteres Ende des Primärstromkanals (2) ausgebildet ist.

6. Triebwerk nach Anspruch 4 und 5, **dadurch gekennzeichnet, dass** hinter jedem Fan (4; 4a, 4b) und vor jeder Niederdruckturbine (5; 5a, 5b) der Primärstromkanal (2) oder Teilkanäle (21a, 21b, 23a, 23b) des Primärstromkanals (2) gekrümmt verlaufen und dabei einen Wendepunkt der Krümmung durchlaufen.

7. Triebwerk nach einem der vorangehenden Ansprüche, **dadurch gekennzeichnet, dass** das Triebwerk mindestens zwei Fans (4a, 4b) und mindestens zwei Niederdruckturbinen (5a, 5b) aufweist, wobei jeweils ein Fan (4a, 4b) und eine Niederdruckturbine (5a, 5b) über eine Niederdruckwelle (6a, 6b) miteinander gekoppelt sind, und wobei jedoch nur ein Kerntriebwerk (1) mit einer Hochdruckwelle (14) vorhanden ist.

8. Triebwerk nach Anspruch 7, **dadurch gekennzeichnet, dass** der Primärstromkanal (2) an seinem axial vorderen Ende mindestens zwei Kanäle (21 a, 21 b) ausbildet, die sich vor dem Kerntriebwerk (1) vereinen, wobei jeder Kanal (21a, 21b) einem der Fans (4; 4a, 4b) zugeordnet ist derart, dass in jeden Kanal (21a, 21b) ein Teil des den jeweiligen Fan (4; 4a, 4b) passierenden Luftstroms geleitet wird.

9. Triebwerk nach Anspruch 7 oder 8, **dadurch gekennzeichnet, dass** der Primärstromkanal (2) sich hinter dem Kerntriebwerk (1) in mindestens zwei Kanäle (23a, 23b) aufteilt, die jeweils zu einer der Niederdruckturbinen (5; 5a, 5b) führen.

10. Triebwerk nach einem der Ansprüche 7 bis 9, **dadurch gekennzeichnet, dass** das Triebwerk zwei Fans (4a, 4b), zwei Niederdruckturbinen (5a, 5b) und zwei Niederdruckwellen (6a, 6b) aufweist und das Kerntriebwerk (1) versetzt zu der Ebene angeordnet ist, die durch die beiden Niederdruckwellen (6a, 6b) definiert ist.

11. Triebwerk nach einem der Ansprüche 7 bis 10, **dadurch gekennzeichnet, dass** das Triebwerk mindestens ein Außengehäuse (7a, 7b, 9) umfasst, das mehrere Sekundärstromkanäle entsprechend der Anzahl der Fans (4a, 4b) definiert.

12. Triebwerk nach einem der vorangehenden Ansprüche, **dadurch gekennzeichnet, dass** der mindestens eine Sekundärstromkanal (3; 3a, 3b) in axialer Richtung vor dem Primärstromkanal (2) endet.

13. Triebwerk nach einem der vorangehenden Ansprüche, **dadurch gekennzeichnet, dass** das Kerntriebwerk des weiteren einen Mitteldruckverdichter und eine Mitteldruckturbine aufweist, die über eine Mitteldruckwelle miteinander gekoppelt sind.

## Claims

1. Turbofan engine provided with:
- just a core engine (1), having a high-pressure compressor (11), a combustion chamber (12) and a high-pressure turbine (13) which are coupled to one another via a high-pressure shaft (14),
- at least one fan (4, 4a, 4b) from which gas is supplied into both a primary flow duct (2) and a secondary flow duct (3, 3a, 3b) of the turbofan engine,
- at least one low-pressure turbine (5, 5a, 5b) arranged downstream of the core engine (1), and
- at least one low-pressure shaft (6, 6a, 6b), with each low-pressure shaft (6, 6a, 6b) coupling a fan (4, 4a, 4b) to a low-pressure turbine (5, 5a, 5b),
- where no low-pressure shaft (6, 6a, 6b) of the turbofan engine passes through the core engine (1),
**characterized in that**
each low-pressure shaft (6, 6a, 6b) runs substantially parallel to the high-pressure shaft (14).

2. Engine in accordance with Claim 1, **characterized in that** no low-pressure shaft (6, 6a, 6b) of the turbofan engine runs coaxially to the high-pressure shaft (14) of the turbofan engine.

3. Engine in accordance with one of the preceding Claims, **characterized in that** the primary flow duct (2) or part-ducts (21a, 21b, 23a, 23b) of the primary flow duct (2) is/ are deflected upstream and downstream of the core engine (1) in the radial direction such that the section (22) of the primary flow duct (2) passing through the core engine (1) is radially spaced from each secondary flow duct (3, 3a, 3b).

4. Engine in accordance with Claim 3, **characterized in that** relative to the flow direction an axially front end of the primary flow duct (2) is provided downstream of each fan (4, 4a, 4b).

5. Engine in accordance with Claim 3 or 4, **characterized in that** relative to the flow direction an axially rear end of the primary flow duct (2) is provided upstream of each low-pressure turbine (5, 5a, 5b).

6. Engine in accordance with Claims 4 and 5, **characterized in that** downstream of each fan (4, 4a, 4b) and upstream of each low-pressure turbine (5, 5a, 5b) the primary flow duct (2) or part-ducts (21a, 21b, 23a, 23b) of the primary flow duct (2) run(s) in a curve, passing through a turning point of the curvature.

7. Engine in accordance with one of the preceding Claims, **characterized in that** the engine includes at least two fans (4a, 4b) and at least two low-pressure turbines (5a, 5b), where a fan (4a, 4b) and a low-pressure turbine (5a, 5b) are coupled to one another by a low-pressure shaft (6a, 6b) in each case, and where however only one core engine (1) with a high-pressure shaft (14) exists.

8. Engine in accordance with Claim 7, **characterized in that** the primary flow duct (2) forms at its axially front end at least two ducts (21a, 21b) which merge upstream of the core engine (1), where each duct (21a, 21 b) is associated with one of the fans (4, 4a, 4b), so that part of the airflow passing the respective fan (4, 4a, 4b) is guided into each duct (21a, 21b).

9. Engine in accordance with Claim 7 or 8, **characterized in that** the primary flow duct (2) splits downstream of the core engine (1) into at least two ducts (23a, 23b) which each lead to one of the low-pressure turbines (5, 5a, 5b).

10. Engine in accordance with one of the Claims 7 to 9, **characterized in that** the engine includes two fans (4a, 4b), two low-pressure turbines (5a, 5b) and two low-pressure shafts (6a, 6b), and that the core engine (1) is arranged offset to the plane defined by the two low-pressure shafts (6a, 6b).

11. Engine in accordance with one of the Claims 7 to 10, **characterized in that** the engine includes at least one outer casing (7a, 7b, 9) that defines several secondary flow ducts, the number of ducts matching the number of fans (4a, 4b).

12. Engine in accordance with one of the preceding Claims, **characterized in that** the at least one secondary flow duct (3, 3a, 3b) ends in the axial direction upstream of the primary flow duct (2).

13. Engine in accordance with one of the preceding Claims, **characterized in that** the core engine furthermore has an intermediate-pressure compressor and an intermediate-pressure turbine coupled to one another by an intermediate-pressure shaft.

## Revendications

1. Turboréacteur à soufflante, comprenant :
- juste un coeur de moteur (1) qui présente un compresseur haute pression (11), une chambre de combustion (12) et une turbine haute pression (13) qui sont couplés entre eux par un arbre haute pression (14),
- au moins une soufflante (4, 4a, 4b) par laquelle du gaz est acheminé dans un canal de flux primaire (2) ainsi que dans un canal de flux secondaire (3, 3a, 3b) du turboréacteur à soufflante,
- au moins une turbine basse pression (5, 5a, 5b) placée en aval du coeur de moteur (1), et
- au moins un arbre basse pression (6, 6a, 6b), sachant que chaque arbre basse pression (6, 6a, 6b) couple une soufflante (4, 4a, 4b) avec une turbine basse pression (5, 5a, 5b),
- et qu'aucun arbre basse pression (6, 6a, 6b) du turboréacteur à soufflante ne s'étend à travers le coeur de moteur (1),
**caractérisé en ce**
**que** chaque arbre basse pression (6, 6a, 6b) s'étend sensiblement parallèlement à l'arbre haute pression (14).

2. Réacteur selon la revendication n° 1, **caractérisé en ce qu'**aucun arbre basse pression (6, 6a, 6b) du turboréacteur à soufflante ne s'étend coaxialement à l'arbre haute pression (14) du turboréacteur à soufflante.

3. Réacteur selon une des revendications précédentes, **caractérisé en ce que** le canal de flux primaire (2) ou des canaux partiels (21 a, 21 b, 23a, 23b) du canal de flux primaire (2) est/ sont dévié(s) en amont et en aval du coeur de moteur (1) dans le sens radial de manière telle que la partie (22) du canal de flux primaire (2) qui passe à travers le coeur de moteur (1) s'étend dans le sens radial à distance de chaque canal de flux secondaire (3, 3a, 3b).

4. Réacteur selon la revendication n° 3, **caractérisé en ce que** par rapport au sens d'écoulement est formée en aval de chaque soufflante (4, 4a, 4b) une extrémité antérieure axiale du canal de flux primaire (2).

5. Réacteur selon la revendication n° 3 ou n° 4, **caractérisé en ce que** par rapport au sens d'écoulement est formée en amont de chaque turbine basse pression (5, 5a, 5b) une extrémité postérieure axiale du canal de flux primaire (2).

6. Réacteur selon les revendications n° 4 et n° 5, **caractérisé en ce qu'**en aval de chaque soufflante (4, 4a, 4b) et en amont de chaque turbine basse pression (5, 5a, 5b), le canal de flux primaire (2) ou des canaux partiels (21a, 21b, 23a, 23b) du canal de flux primaire (2) s'étend(ent) en suivant une courbe et, cela étant, passe(nt) par un point d'inflexion de la courbe.

7. Réacteur selon une des revendications précédentes, **caractérisé en ce que** le moteur présente au moins deux soufflantes (4a, 4b) et au moins deux turbines basse pression (5a, 5b), sachant que respectivement une soufflante (4a, 4b) et une turbine basse pression (5a, 5b) sont couplées entre elles par un arbre basse pression (6a, 6b), et que cependant est présent juste un coeur de moteur (1) avec un arbre haute pression (14).

8. Réacteur selon la revendication n° 7, **caractérisé en ce qu'**à son extrémité antérieure axiale, le canal de flux primaire (2) forme au moins deux canaux (21 a, 21 b) qui se rejoignent en amont du coeur de moteur (1), sachant que chaque canal (21a, 21b) est associé à l'une des soufflantes (4, 4a, 4b) de manière telle que dans chaque canal (21a, 21 b) est guidée une partie du flux d'air passant dans la soufflante (4, 4a, 4b) respective.

9. Réacteur selon la revendication n° 7 ou n° 8, **caractérisé en ce qu'**en aval du coeur de moteur (1), le canal de flux primaire (2) se divise en au moins deux canaux (23a, 23b) qui conduisent respectivement à l'une des turbines basse pression (5, 5a, 5b).

10. Réacteur selon une des revendications n° 7 à n° 9, **caractérisé en ce que** le moteur présente deux soufflantes (4a, 4b), deux turbines basse pression (5a, 5b) et deux arbres basse pression (6a, 6b) et que le coeur de moteur (1) est disposé en décalage par rapport au plan défini par les deux arbres basse pression (6a, 6b).

11. Réacteur selon une des revendications n° 7 à n° 10, **caractérisé en ce que** le moteur comprend au moins un carter extérieur (7a, 7b, 9) qui définit plusieurs canaux de flux secondaire dont le nombre correspond au nombre de soufflantes (4a, 4b).

12. Réacteur selon une des revendications précédentes, **caractérisé en ce que** l'au moins un canal de flux secondaire (3, 3a, 3b) se termine en amont du canal de flux primaire (2) dans le sens axial.

13. Réacteur selon une des revendications précédentes, **caractérisé en ce que** le coeur de moteur présente en outre un compresseur moyenne pression et une turbine moyenne pression qui sont couplés entre eux par un arbre moyenne pression.
